## Europäisches Patentamt

(19) **European Patent Office**

**Office européen des brevets**

(11) Publication number: **0 184 098**
**A1**

---

(12) **EUROPEAN PATENT APPLICATION**

(21) Application number: **85114922.9**

(22) Date of filing: **26.11.85**

(51) Int. Cl.⁴: **B 25 J 7/00**
**F 16 H 19/00, B 23 Q 35/20**

---

(30) Priority: **30.11.84 JP 254493/84**

(43) Date of publication of application:
**11.06.86 Bulletin 86/24**

(84) Designated Contracting States:
**AT BE CH DE FR GB IT LI LU NL SE**

(71) Applicant: **Opto Micron Industry Co. Ltd.**
**Sagami Building 7-9, Yaesu 2-chome**
**Chuo-ku Tokyo 104(JP)**

(72) Inventor: **Sato, Setsuo**
**7-7, minami-Senzoku 1-chome**
**Ohta-ku Tokyo 145(JP)**

(72) Inventor: **Enomoto, Kazuya**
**29-18, Setagaya 2-chome**
**Setagaya-ku Tokyo 154(JP)**

(74) Representative: **Strohschänk, Heinz, Dipl.-Ing. et al,**
**Patentanwälte Strohschänk, Uri & Strasser Innere**
**Wiener Strasse 8**
**D-8000 München 80(DE)**

---

(54) **Submicromanipulator.**

(57) A super-accurate submicromanipulator which can always accurately output a displacement amount of a preset transformation ratio is provided. An output shaft (11) is mounted to a slider block (10) which can undergo displacement in the front and rear directions. The output shaft is used as the middle fulcrum of a differential lever (14) which has a first circular gear (12) having a radius equal to a distance from the fulcrum to one input end of the lever and a second circular gear (13) having a radius equal to a distance from the fulcrum to the other input end of the lever. There is a relation of a particular transformation ratio between the lengths of these radii. First and second straight gears are arranged in parallel so as to respectively engage the first and second circular gears. Spindles (15, 16) are arranged to individually allow the straight gears to underto displacements in the front and rear directions. These spindles can be manually operated or driven by motors. A compression spring (21) to push the slider block backwardly may be provided for prevention of backlash in the gear engagement.

FIG. 1

EP 0 184 098 A1

# SUBMICROMANIPULATOR

The present invention relates to a micromanipulator which can attain the high-accuracy positioning by performing fine linear displacement using a differential lever and, more particularly, to a super-accurate submicromanipulator which can perform the fine displacement adjustment of the accuracy of 0.1 μm, namely, of the order of 1/10000 of one milimeter and which can be used for, for example, aligning and coupling the cores of ends of optical fibers that require very high accuracy order of 0.1 to 0.2 μm or the like.

A conventionally well-known displacement mechanism using a differential lever comprises a lever, a pair of parallel feed screws which are provided so as to respectively act on each input portion of one end and the other end of this lever, and a common output portion provided at the intermediate point of the lever. In such a displacement mechanism, for example, when one end of the lever is displaced by means of one feed screw, the other end of the lever serves as a fulcrum and the angular displacement of the lever occurs around this fulcrum as a rotational center, so that each part of the lever undergoes displacement which is proportional to the distance from the fulcrum. Therefore, assuming that the foregoing output portion is provided at a position at which the whole length of the lever is divided into a ratio of 10 : 1, even if the displacements of the same length are caused with respect to both of the feed screw close to the output portion and the feed screw remote therefrom, the displacement amount which was differentially transformed at a ratio of ten for the former feed screw and one for the latter feed screw will be transferred to the output portion. Consequently, the coarse operation occurs in case of the former one, while the fine operation is held in case of the latter one.

A micromanipulator which has been developed on the basis of the displacement mechanism for fine and coarse adjustments using the foregoing differential lever is set forth in U. S. Patent Serial No. 4,139,948 and in Japanese Patent Application Publication Laid-open No. 25358/1982. As will be understood from these references, the end portion (tip) of each feed screw (spindle) which comes into contact with the input portions of both ends of the differential lever has a micro hemispherical shape, and these hemispherical tips are respectively come into pressure contact with the side surface of both ends of the differential lever due to the forces of springs.

Therefore, in the case where the differential lever comes into contact with the feed screws at an angle which is normal to the axial directions of the pair of parallel feed screws, both of their contacts are located on the apexes of the hemispherical tips and coincide with the points on the extended lined of the axes of the respective feed screws; therefore, the ratio of the distance between the contact and the input portion to the distance between the contact and the output portion coincides with a preset ratio and its transformation ratio becomes accurate.

However, when only the feeding operation of either one of the pair of feed screws progresses and the differential lever comes into contact with the feed screws at an angle which is not normal to the axial directions of the pair of parallel feed screws, the contact on the projecting side undergoes inward displacement, so that the distance between this contact and the output portion becomes shorter than the above-mentioned standard value. On the contrary,

0184098

- 3 -

the contact on the non-projecting side is subjected to outward displacement, so that the distance between this contact and the output portion becomes longer than the standard value. There is a tendency such that a degree of unbalance between those short and long distances increases as the gradient (degree of non-right angle) of the differential lever to the feed screws becomes large. In such a case, the preset tansformation ratio varies, so that the transformation displacement amount of a desired magnification cannot be derived but an error will have been caused. In the micromanipulator which performs the displacement adjustment of the accuracy order of 1/10000 of one millimeter, occurrence of such error causes a large problem which cannot be ignored.

The first object of the present invention is to provide a super-accurate submicromanipulator in which even if the contact angle with a feed screw in the input portion of a differential lever changes, the displacement amount of a preset transformation ratio can be always accurately outputted without causing any slight change in distance between the input portion and the output portion.

The second object of the present invention is to provide a super-accurate submicromanipulator in which a constant transformation ratio is always maintained without causing any small error with regard to not only fine displacement but also both fine and coarse displacements.

According to the present invention, these objects are accomplished by a submicromanipulator comprising: an output shaft mounted on a slider block which can undergo displacement in the front and rear directions; a differential lever in which the output shaft is used as a middle fulcrum and which has a first circular gear having a radius equal to a distance from the fulcrum to one input end of this lever and a second circular gear having a radius equal to a distance from the fulcrum to the other input end of the lever and which has a relation of a particular transformation ratio between the lengths of these radii; first and second straight gears which are arranged in parallel and respectively engage the first and second circular gears; and spindles to individually allow the straight gears to undergo displacements in the front and rear directions. These spindles can be manually operated or driven by motors. A compression spring to push the slider block backwardly may be provided for prevention of backlash in the gear engagement. Further, a pair of limit switches may be arranged to face each other at permissible limit positions with respect to an angular displacement of the first circular gear in order to stop the driving of the motor.

Fig. 1 is a schematic explanatory diagram showing a fundamental arrangement of a submicromanipulator according to the present invention;

Figs. 2 to 8 show the first embodiment of the present invention which is provided with only a fine displacement mechanism;

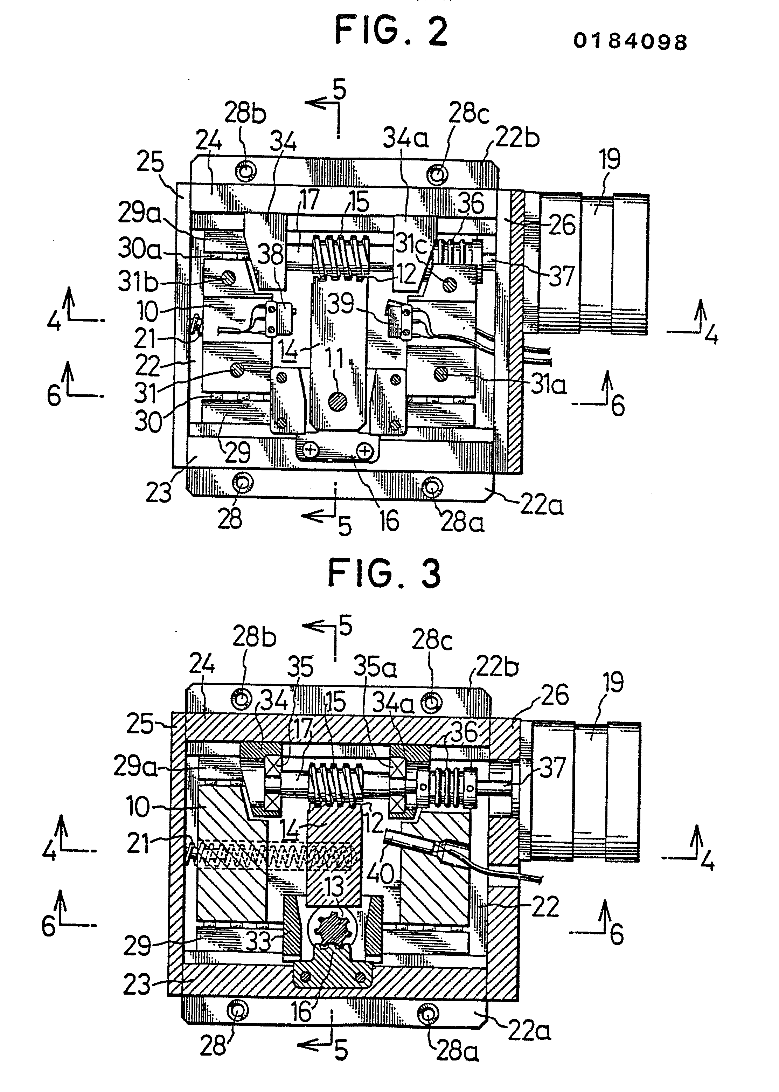

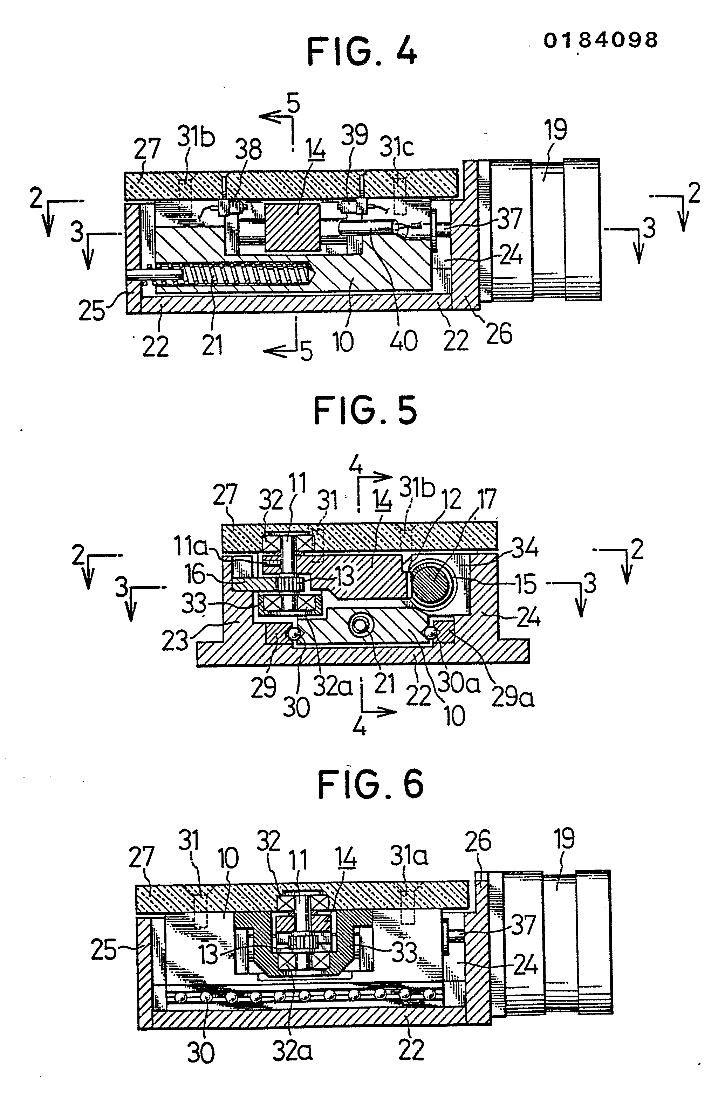

Fig. 2 is a transverse plan view taken along the line 2-2 of Figs. 4 and 5;

Fig.3 is a transverse plan view taken along the line 3-3 of Figs. 4 and 5;

Fig. 4 is a vertical cross sectional and left side elevational view taken along the line 4-4 of Figs. 2, 3 and 5;

Fig. 5 is a vertical cross sectional and rear elevational view taken along the line 5-5 of Figs. 2, 3 and 4;

Fig. 6 is a vertical cross sectional and left side elevational view taken along the line 6-6 of Figs. 2 and 3;

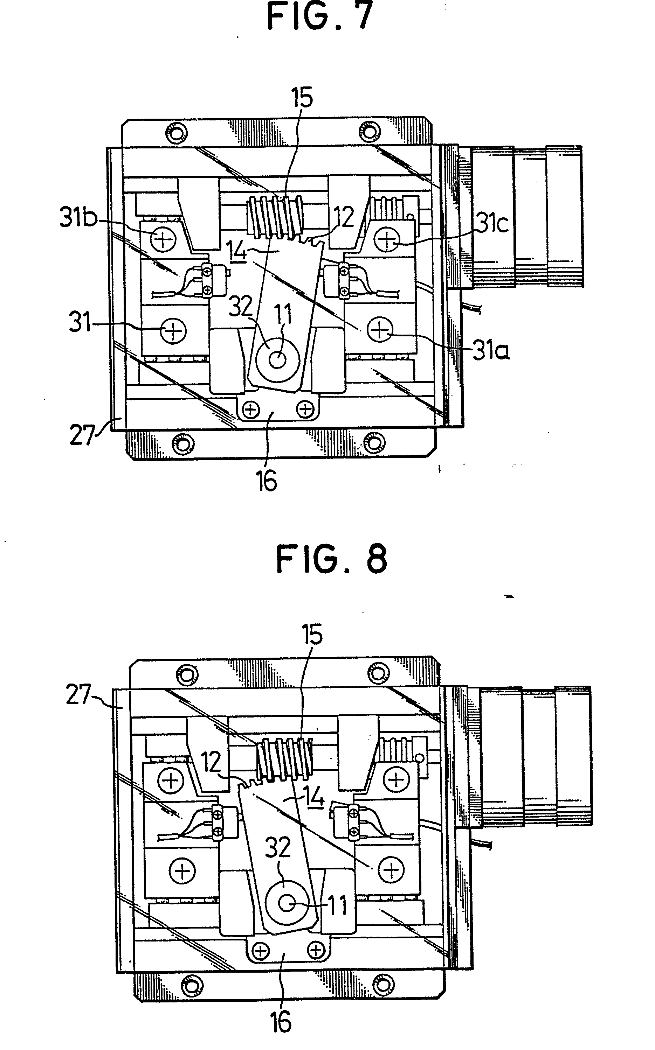

Fig. 7 is a plan view showing the state in that a differential lever undergoes the limit displacement to the rightmost side in the drawing;
Fig. 8 is a plan view showing the state in that the
differential lever undergoes the limit displacement to
the leftmost side in the drawing; and

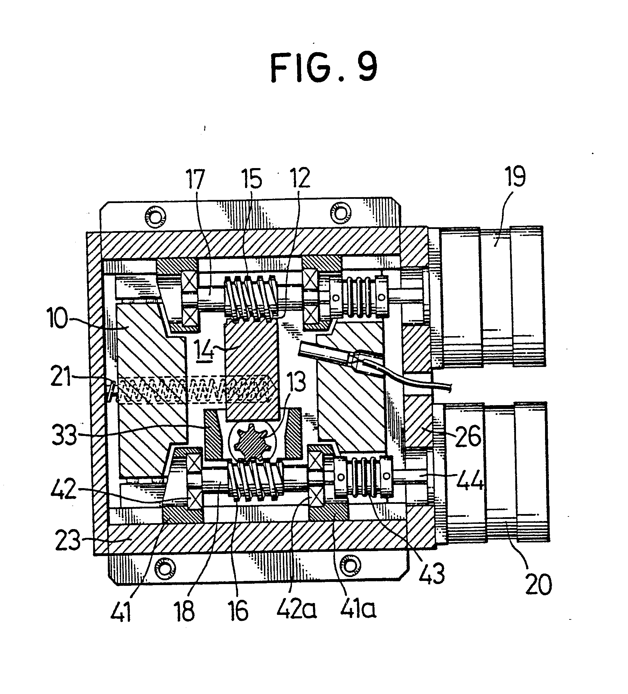

Fig. 9 is a transverse cross sectional plan view showing
the second embodiment of the present invention which is
provided with both fine and coarse displacement mechanisms.

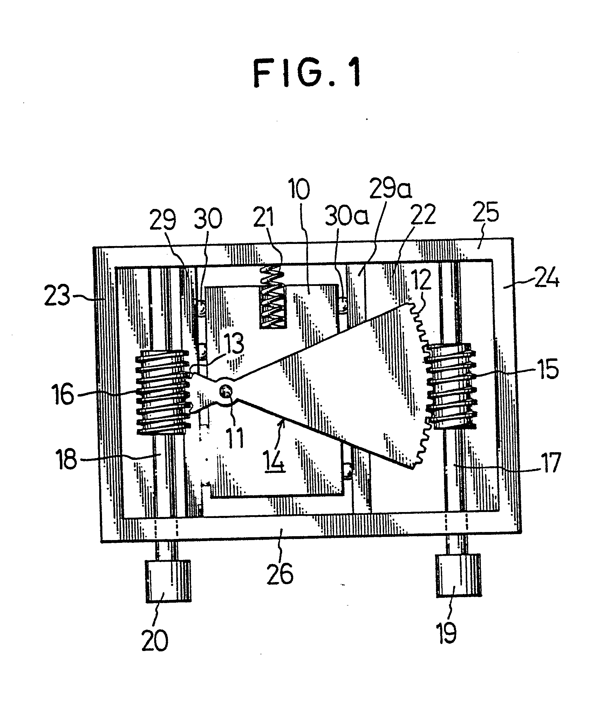

An arrangement of the present invention will now be briefly
described with reference to Fig. 1.

An output shaft 11 is mounted to a slider block 10 which
can undergo displacement in the front and rear directions
and the output shaft 11 is used as the middle fulcrum.
A differential lever 14 is provided which has one input
end 12 and the other input end 13 that are respectively
remote from the fulcrum 11 to the right and left by the
distances having the relation of a particular transformation ratio. The first and second circularly arranged teeth
(hereinafter, referred to as the circular gears) 12 and
13 having the radii corresponding to the distances from
the fulcrum 11 serving as the rotational center to their
peripheral portions are respectively formed on the input
ends 12 and 13 of the differential lever 14, respectively.
Further, first and second rectilinearly arranged teeth
(hereinbelow, referred to as straight gears) 15 and 16
are arranged in parallel so as to respectively engage
the first and second circular gears 12 and 13. A spindle
17 or spindles 17 and 18 are arranged to cause displacement(s)
of either one of or both of those straight gears in the
front and rear directions.

Although the spindles can be manually operated, they can
be also driven by a motor 19 or motors 19 and 20.

For example, a compression spring 21 to push the slider block 10 backwardly is provided as means for preventing the backlash in the gear engagement.

In this invention, the first and second circular gears 12 and 13 are respectively provided at one and the other input ends of the differential lever 14, while the parallel first and second straight gears 15 and 16 are respectively come into engagement with the first and second circular gears. Therefore, even in the case where an engagement angle between the differential lever 14 and each of the straight gears is a right angle or a non-right angle, both right and left distances among the engagement points and the fulcrum 11 respectively correspond to the lengths of the specified radii and are constant, causing no change in length. Therefore, the transformation ratio between the right and left parts of the differential lever is always constant and does not vary, so that there is no room of occurrence of errors.

In Fig. 1, driving of the first spindle 17 allows fine displacement to be outputted from the output shaft 11, while the operation of the second spindle 18 permits coarse displacement to be outputted from the output shaft 11.

Enbodiments of the present invention will then be described in detail hereinbelow with reference to the drawings. Figs. 2 to 8 illustrate a submicromanipulator provided with only a fine displacement mechanism (first embodiment), while Fig. 9 shows a submicromanipulator provided with both fine and coarse displacement mechanisms (second embodiment).

A casing consists of a base plate 22, double-sided panels 23 and 24 which are formed integrally with the base plate 22, a front panel 25, a rear panel 26, and a displacement-transfer plate 27 made of transparent material which also serves as a lid plate. This casing is fixed on a surface (not shown) by respectively inserting bolts (not shown) into holes 28, 28a, 28b, and 28c formed in double-sided edge portions 22a and 22b of the base plate 22.

The slider block 10 is attached so that it can freely undergo displacement in the front and rear directions in a manner such that both side surface portions are respectively guided through ball bearings 30 and 30a between guide blocks 29 and 29a which are respectively provided inside the double-sided panels 23 and 24.

Further, the upper surface of the slider block 10 is fixed to the lower surface of the displacement-transfer plate 27 that also serves as a lid plate by means of screws 31, 31a, 31b, and 31c.

On the other hand, the compression spring 21 is disposed between the slider block 10 and the front panel 25, thereby eliminating errors which are caused due to the backlash in the gear engagement that will be explained later.

As is clearly illustrated in Figs. 5 to 8, the output shaft 11 is rotatably attached through a bearing 32 to the lower surface near the left side of the central portion of the displacement-transfer plate 27. The lower end portion of the shaft 11 is rotatably supported through a bearing 32a by a bracket 33 which protrudes from the lower surface of the plate 27. The second circular gear, for instance, the pinion 13 is fixed to the intermediate portion of the output shaft 11. As shown in Figs. 3 and 4, the pinion 13 engages the rack 16 (second straight gear) fixed inwardly from the middle portion of the left panel 23.

The differential lever 14 is fixed at its middle portion to the output shaft 11 through a screw 11a (refer to Fig. 5). The sector gear 12 (first circular gear) having the radius using the output shaft 11 as the rotational center is arranged at the free end (one input end) of the lever 14. The sector gear 12 engages the worm 15 (first straight gear).

The worm 15 is arranged such that the arrangement direction of its teeth is parallel to the teeth of the rack 16 and both ends of the spindle 17 (first spindle) of the worm 15 are rotatably supported through bearings 35 and 35a by a pair of brackets 34 and 34a which protrude inwardly from the right panel 24. Further, the rear end of the spindle 17 is coupled to an output shaft 37 of the stepping motor 19 through a coupling 36.

As shown in Figs. 2 and 4, limit switches 38 and 39 are respectively arranged to face each other at the permissible limit positions with respect to the swinging motions in the front and rear directions of the differential lever 14. The driving of the motor 19 is stopped when the corresponding limit switch is closed due to the angular displacement of the differential lever 14.

In Figs.3 and 4, a contactless switch 40 is used as a sensor for detecting the initial position of the differential lever 14.

In comparison among Figs. 2,7 and 8, the differential lever 14 is located at a position which is perpendicular to the spindle 17 in Fig. 2; it is slanted to the backward limit position in Fig. 7; and it is slanted to the forward limit position in Fig. 8. However, the distance between one input end 12 (engaging portion between the sector gear 12 and the worm 15) and the fulcrum 11 is always constant and does not change irrespective of the slanting motions in the front and rear directions.

On the other hand, the distance between the other input end 13 (engaging portion between the pinion 13 and the rack 16) and the fulcrum 11 is also always constant and does not vary irrespective of the slanting motions in the front and rear directions.

Therefore, the displacement amount of the preset transformation ratio can be always accurately outputted without causing any error even if the differential lever 14 changes at any angle with regard to the spindle.

The second embodiment of the invention will now be explained. Fig. 9 shows a submicromanipulator provided with both fine and coarse displacement mechanisms. The second embodiment is substantially similar to the foregoing first embodiment excluding the following different points. Namely, in place of the fixed rack 16 as the second straight gear which engages the pinion 13, the movable worm 16 is used and this worm is further supported by the second spindle 18. Both ends of the spindle 18 are rotatably supported through bearings 42 and 42a by a pair of brackets 41 and 41a which protrude inwardly from the left panel 23. In addition, the rear end of the spindle 18 is coupled to an output shaft 44 of the second stepping motor 20 through a coupling 43.

An effect of the coarse feed is as follows. For instance, in the case where the transformation ratio is 10 : 1, a large displacement that is ten times larger than the displacement by the fine feed can be attained, so that this makes it possible to rapidly and easily approach a location at close range where the adjustment is required.

0184098

- 10 -

According to the embodiments of the invention, the input portions 12 and 13 at both ends of the differential lever 14 are together formed as the circular gears having the radii in which the fulcrum 11 is the rotational center, while the parallel straight gears 15 and 16 which respectively engage the circular gears are arranged to the right and left spindles 17 and 18 or to the fixed portion. Therefore, even if an angle between the differential lever 14 and each spindle or fixed portion arbitrarily varies, the ratio of the distance between the input portion 12 and the output shaft 11 to the distance between the input portion 13 and the output shaft 11 is not different from the preset transformation ratio, so that the accurate fine displacement can be always obtained without causing any error.

Claims:

1.   A submicromanipulator which is used only for fine displacement comprising:  an output shaft mounted on a slider block which can undergo displacement in the front and rear directions: a differential lever in which said output shaft is used as a middle fulcrum and which has a first circular gear having a radius equal to a distance from said fulcrum to one input end of said differential lever and a second circular gear having a radius equal to a distance from said fulcrum to the other input end of said lever, said differential lever having a relation of a particular transformation ratio between both of said distances corresponding to said radii; first and second straight gears which are parallel to each other and respectively engage said first and second circular gears; and a spindle to allow either one of said straight gears to undergo displacement in the front and rear directions.

2.   A submicromanipulator which is used only for fine displacement comprising: an output shaft mounted on a slider block which can undergo displacement in the front and rear directions: a differential lever in which said output shaft is used as a middle fulcrum and which has a first circular gear having a radius equal to a distance from said fulcrum to one input end of said differential lever and a second circular gear having a radius equal to a distance from said fulcrum to the other input end of said lever, said differential lever having a relation of a particular transformation ratio between both of said distances corresponding to said radii: first and second straight gears which are parallel to each other and respectively engage said first and second circular gears: a spindle to allow either one of said straight gears to undergo displacement in the front and rear directions: a motor to rotate and drive said spindle: and a pair of limit switches, arranged to face each other at permissible

- 12 -

0184098

limit positions with respect to an angular displacement of said first circular gear, for stopping the driving of said motor.

3. A submicromanipulator which is used only for fine displacement comprising: an output shaft mounted on a slider block which can undergo displacement in the front and rear directions; a differential lever in which said output shaft is used as a middle fulcrum and which has a first circular gear having a radius equal to a distance from said fulcrum to one input end of said differential lever and a second circular gear having a radius equal to a distance from said fulcrum to the other input end of said lever, said differential lever having a relation of a particular transformation ratio between both of said distances corresponding to said radii; first and second straight gears which are parallel to each other and respectively engage said first and second circular gears; a spindle to allow either one of said straight gears to undergo displacement in the front and rear directions; and elastic means for pushing said slider block in either front of rear direction to prevent backlash.

4. A submicromanipulator according to claim 1, 2 or 3, wherein said first circular gear is a sector gear, said first straight gear which engages said first circular gear is a first worm, said second circular gear is a pinion, and said second straight gear which engages said second circular gear is a rack.

5. A submicromanipulator accoding to claim 3, wherein a compression spring is used as said elastic means for preventing backlash.

6. A submicromanipulator which is used for both fine and coarse displacements comprising: an output shaft mounted on a slider block which can undergo displacement in the front and rear directions; a differential lever in which said output shaft is used as a middle fulcrum and which has a first circular gear having a radius equal to a distance from said fulcrum to one input end of said differential lever and a second circular gear having a radius equal to a distance from said fulcrum to the other input end of said lever, said differential lever having a relation of a particular transformation ratio between both of said distances corresponding to said radii; first and second straight gears which are parallel to each other and respectively engage said first and second circular gears; and first and second spindles to respectively and individually allow said first and second straight gears to undergo displacements in the front and rear directions.

7. A submicromanipulator which is used for both fine and coarse displacements comprising: an output shaft mounted on a slider block which can undergo displacement in the front and rear directions; a differential lever in which said output shaft is used as a middle fulcrum and which has a first circular gear having a radius equal to a distance from said fulcrum to one input end of said differential lever and a second circular gear having a radius equal to a distance from said fulcrum to the other input end of said lever, said differential lever having a relation of a particular transformation ratio between both of said distances corresponding to said radii; first and second straight gears which are parallel to each other and respectively engage said first and second circular gears; first and second spindles to respectively and individually allow said first and second straight gears to undergo displacements in the front and rear directions; and first and second motors to respectively and individually rotate and drive said first and second spindles.

8. A submicromanipulator which is used for both fine and coarse displacements comprising: an output shaft mounted on a slider block which can undergo displacement in the front and rear directions; a differential lever in which said output shaft is used as a middle fulcrum and which has a first circular gear having a radius equal to a distance from said fulcrum to one input end of said differential lever and a second circular gear having a radius equal to a distance from said fulcrum to the other input end of said lever, said differential lever having a relation of a particular transformation ratio between both of said distances corresponding to said radii; first and second straight gears which are parallel to each other and respectively engage said first and second circular gears; first and second spindles to respectively and individually allow said first and second straight gears to undergo displacements in the front and rear directions; and elastic means for pushing said slider block in either front or rear direction to prevent backlash.

9. A submicromanipulator according to claim 6, 7 or 8, wherein said first circular gear is a sector gear, said first straight gear which engages said first circular gear is a first worm, said second circular gear is a pinion, and said second straight gear which engages said second circular gear is a second worm.

10. A submicromanipulator according to claim 8, wherein a compression spring is used as said elastic mears for preventing backlash.

# FIG.1

# FIG. 2

0184098

# FIG. 3

# FIG. 4

# FIG. 5

# FIG. 6

0184098

# FIG. 7

# FIG. 8

# FIG. 9

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A,D | US-A-4 139 948 (TSUCHIYA et al.) <br> * Abstract * | 1 | B 25 J 7/00 <br> F 16 H 19/00 <br> B 23 Q 35/20 |
| A | US-H- 509 586 (NEWELL) <br> * Column 2, lines 34-61 * | 1 | |
| A | MACHINE DESIGN, vol. 55, no. 16, 7th July 1983, pages 112,115, Cleveland, Ohio, US; F. STRASSER: "Precision adjustments with screw mechanisms" <br> * Page 115, column 1, last figure * | 1 | |
| A | IBM TECHNICAL DISCLOSURE BULLETIN, vol. 17, no. 1, June 1974, page 227, New York, US; D.R. McEFEE: "Two-speed drive link" | 1 | |

TECHNICAL FIELDS SEARCHED (Int. Cl.4)

B 25 J
F 16 H
G 02 B
B 23 Q
G 03 B
H 01 G
H 01 C

The present search report has been drawn up for all claims

| Place of search <br> THE HAGUE | Date of completion of the search <br> 06-03-1986 | Examiner <br> LAMMINEUR P.C.G. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03 82